(19) Europäisches Patentamt
European Patent Office
Office européen des brevets

(11) Veröffentlichungsnummer: **0 134 197**
**B1**

# (12) EUROPÄISCHE PATENTSCHRIFT

(45) Veröffentlichungstag der Patentschrift: **01.06.88**

(51) Int. Cl.⁴: **C 09 B 62/09,** D 06 P 3/66

(21) Anmeldenummer: **84810382.6**

(22) Anmeldetag: **06.08.84**

## (54) Reaktivfarbstoffe der Disazoreihe, deren Herstellung und Verwendung.

(30) Priorität: **10.08.83 CH 4363/83**

(43) Veröffentlichungstag der Anmeldung: **13.03.85 Patentblatt 85/11**

(45) Bekanntmachung des Hinweises auf die Patenterteilung: **01.06.88 Patentblatt 88/22**

(84) Benannte Vertragsstaaten: **CH DE FR GB IT LI**

(56) Entgegenhaltungen: **FR - A - 2 398 095**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Käser, Adolf, Dr., Spitzackerstrasse 118, CH-4103 Bottmingen (CH)**

**EP 0 134 197 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Anmeldung betrifft neue verbesserte reaktive Disazofarbstoffe, die sich besonders für das Färben von cellulosehaltigen Fasermaterialien nach dem Ausziehfärbeverfahren eignen, und die nassechte Färbungen in braunen Tönen ergeben, sowie Verfahren zur Herstellung dieser Farbstoffe, und deren Verwendung zum Färben und Bedrucken von textilen Materialien.

Gegenstand der Erfindung sind Reaktivfarbstoffe der Formel

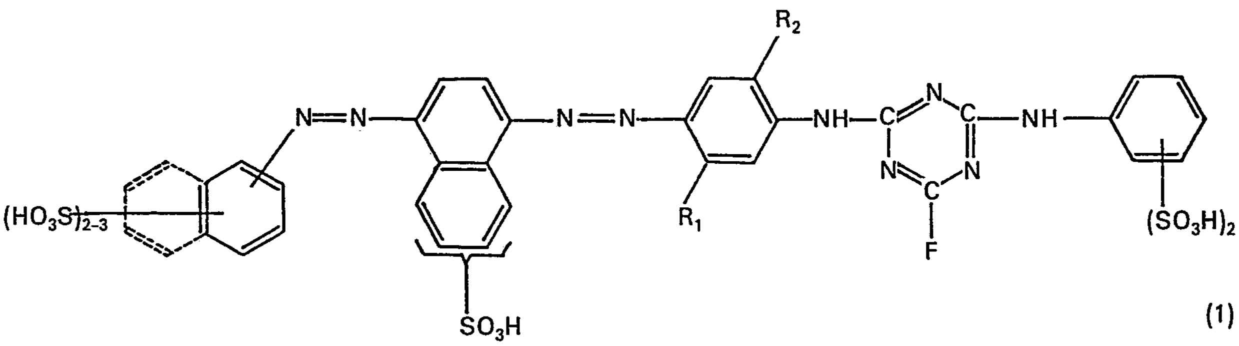

(1)

worin $R_1$ und $R_2$ unabhängig voneinander Wasserstoff, $C_{1-4}$-Alkyl oder $C_{1-4}$-Alkoxy sind.

Der Rest der Diazokomponente in Formel (1) ist Disulfophenyl oder Di- oder Trisulfonaphthyl-(1) oder -(2). Als Substituenten $R_1$ und $R_2$ kommen in Betracht: Wasserstoff, Methyl, Aethyl, Propyl, Isopropyl, Butyl, Isobutyl, sek.-Butyl, tert.-Butyl, Methoxy, Äthoxy, Propyloxy, Isopropyloxy, Butyloxy, Isobutyloxy, sek.-Butyloxy und tert.-Butyloxy.

Bevorzugt sind Reaktivfarbstoffe der Formel (1), worin $R_1$ und $R_2$ unabhängig voneinander Wasserstoff oder Methyl sind.

Bevorzugt sind insbesondere Reaktivfarbstoffe der Formel (1), worin $R_1$ Methyl und $R_2$ Wasserstoff ist.

Ein wertvoller Vertreter ist der Reaktivfarbstoff der Formel

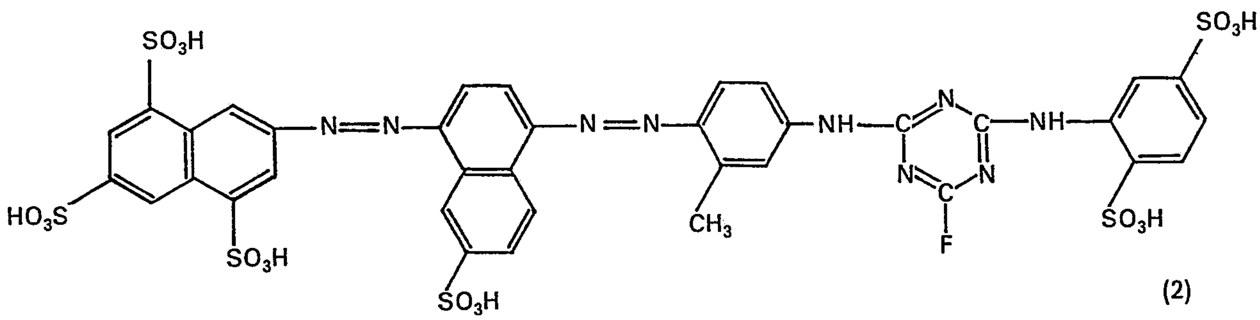

(2)

Das Verfahren zur Herstellung der Reaktivfarbstoffe der Formel (1) ist dadurch gekennzeichnet, dass man eine Verbindung der Formel

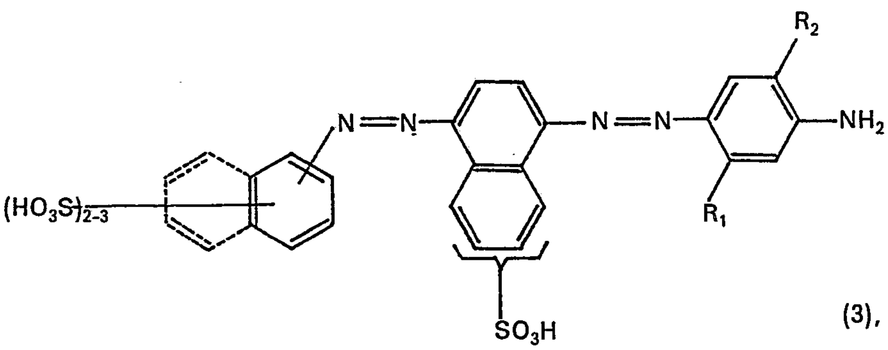

(3),

2,4,6-Trifluor-s-triazin und eine Verbindung der Formel

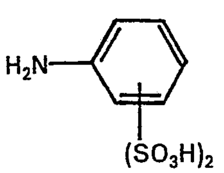

(4)

in beliebiger Reihenfolge miteinander umsetzt.

Bei dem Verfahren können die einzelnen Schritte in unterschiedlicher Reihenfolge, gegebenenfalls auch gleichzeitig ausgeführt werden; es sind somit verschiedene Varianten möglich. Im allgemeinen führt man die Umsetzung schrittweise nacheinander aus. Dabei hängt es von der Konstitution der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Die Herstellung der erfindungsgemässen Reaktivfarbstoffe der Formel (1) erfolgt vorzugsweise dadurch, dass man

1. einen Amino-disazofarbstoff der Formel (3) mit 2,4,6-Trifluor-s-triazin kondensiert und das primäre Kondensationsprodukt mit einer Aminobenzoldisulfonsäure der Formel (4) kondensiert; oder

2. 2,4,6-Trifluor-s-triazin mit einer Verbindung der Formel (4) monokondensiert, und die erhaltene Zwischenverbindung mit einem Aminodisazofarbstoff der Formel (3) kondensiert.

Die bevorzugte Herstellungsweise des Reaktivfarbstoffes der Formel (2) besteht darin, dass man 2,4,6-Trifluor-s-triazin mit Aminobenzol-2,5-disulfonsäure im molaren Verhältnis 1:1 kondensiert, und das erhaltene primäre Kondensationsprodukt mit einem Amino-disazofarbstoff, erhalten durch zweimalige Kupplung gemäss 2-Naphthylamin-4,6,8-trisulfonsäure → 1-Naphthylamin-6-sulfonsäure → m-Toluidin, kondensiert.

Die Kondensation des 2,4,6-Trifluor-s-triazins mit den Disazoverbindungen der Formel (3) erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert. Die Kondensation des Fluortriazins mit einem Amin der Formel (4) kann vor oder nach der Kondensation des Fluortriazins mit einem Disazofarbstoff der Formel (3) geschehen. Die Kondensation des Fluortriazins mit einem Amin der Formel (4) erfolgt vorzugsweise in wässriger Lösung oder Suspension, bei niedriger Temperatur und bei schwach saurem bis neutralem pH-Wert. Auch hier wird der bei der Kondensation freiwerdende Fluorwasserstoff vorteilhafterweise durch laufende Zugabe von wässrigen Alkalihydroxiden, -carbonaten oder -bicarbonanten neutralisiert. Für die Umsetzung der Difluortriazinfarbstoffe bzw. für die Umsetzung des 2,4,6-Trifluor-s-triazins mit den Aminen der Formel (4) setzt man die freien Amine oder deren Salze ein. Die Umsetzung wird bei Temperaturen etwa zwischen 0 bis 40°C, bevorzugt zwischen 5 und 25°C, unter Zusatz säurebindender Mittel, bevorzugt Natriumhydroxid, in einem pH-Bereich von 2 bis 8, bevorzugt 5 bis 6,5 durchgeführt.

Die als Ausgangsstoffe verwendeten Aminodisazoverbindungen der Formel (3) werden erhalten durch Diazotierung einer Aminobenzol- oder Aminonaphthalin-sulfonsäure der Formel

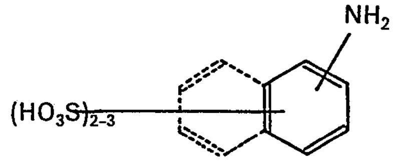

(5)

und Kupplung auf eine Aminonaphthalinsulfonsäure der Formel

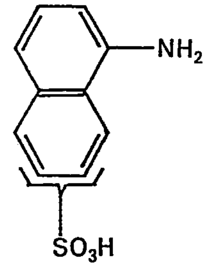

(6),

Weiterdiazotierung der erhaltenen Aminoazoverbindung und erneute Kupplung auf ein Anilin der Formel

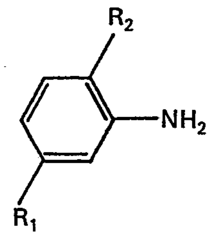

(7).

Geeignete Diazokomponenten der Formel (5) sind:

1-Aminobenzol-2,4-, -2,5- oder -3,5-disulfonsäure, 1-Aminonaphthalin-2,4-, -3,6-, -3,7-, -3,8-, -4,6-, -4,7-, -4,8-, -5,7- oder -6,8-disulfonsäure, 2-Aminonaphthalin-1,5-, -3,6-, -3,7-, -4,8-, -5,7- oder -6,8-disulfonsäure, 1-Aminonaphthalin-2,4,6-, -2,5,7-, -3,6,8- oder -4,6,8-trisulfonsäure, 2-Aminonaphthalin-1,5,7-, -3,6,8- oder -4,6,8-trisulfonsäure.

Als Verbindung der Formel (6) kommen in Betracht: 1-Aminonaphthalin-6- oder -7-sulfonsäure.

Kupplungskomponenten der Formel (7) sind z.B. Anilin, 1-Amino-2-oder -3-methylbenzol, 1-Amino-2-äthylbenzol, 1-Amino-2,5-dimethylbenzol, 1-Amino-2,5-diäthylbenzol, 1-Amino-2- oder -3-methoxybenzol, 1-Amino-2- oder -3-äthoxybenzol, 1-Amino-2,5-dimethoxybenzol, 1-Amino-2,5-diäthoxybenzol, 1-Amino-2-methoxy-5-methylbenzol, 1-Amino-2-methyl-5-methoxybenzol, 1-Amino-2-äthoxy-5-methylbenzol.

Die Diazotierung der Verbindungen der Formel (5) erfolgt durch Einwirkung von salpetriger Säure in wässrig-mineralsaurer Lösung bei tiefer Temperatur. Die Kupplung auf eine Aminonaphthalinsulfonsäure der Formel (6) erfolgt in saurem pH-Bereich. Die so erhaltene Aminomonoazoverbindung kann nach beendeter Kupplung ohne Zwischenisolierung weiterdiazotiert werden. Die zweite Kupplung auf ein Anilin der Formel (7) wird ebenfalls bei saurem pH ausgeführt.

Als Ausgangsstoffe zur Herstellung der Reaktivfarbstoffe der Formel (1) seien weiterhin genannt:

2,4,6-Trifluor-s-triazin (Cyanurfluorid), und als Verbindung der Formel (4): 1-Aminobenzol-2,4, -2,5- und -3,5-disulfonsäure.

Die Umsetzung der Aminodisazoverbindung der Formel (3) mit 2,4,6-Trifluor-s-triazin sowie die abschliessende Kondensation mit einer Verbindung der Formel (4), bzw. die Umsetzung mit einem primären Kondensationsprodukt aus 2,4,6-Trifluor-s-triazin und einer Verbindung der Formel (4), kann auch im Anschluss an die Herstellung der Aminodisazoverbindung der Formel (3) nach beendeter zweiter Kupplung ohne Zwischenisolierung der Aminodisazoverbindung vorgenommen werden.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe, herstellen.

Die Farbstoffe der Formel (1) sind faseraktiv, da sie ein abspaltbares Fluoratum am s-Triazinring enthalten. Unter faseraktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) sind neu. Sie zeichnen sich durch hohe Reaktivität, gute Löslichkeit und hohe Farbstoff-Fixierung aus.

Die Reaktivfarbstoffe der Formel (1) eignen sich zum Färben und Bedrucken der verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Besonders geeignet sind die Reaktivfarbstoffe der Formel (1) zum Färben von Baumwolle nach dem Ausziehfärbeverfahren, wobei sie egale, farbstarke Färbungen mit guten Licht- und Nassechtheiten geben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Gegenüber ähnlichen Reaktivfarbstoffen der DE-OS 2 804 248, die einen Monosulfophenylamino-Substituenten (o-Sulfoanilino) am Fluortriazinrest enthalten, weisen die Farbstoffe der vorliegenden Anmeldung überraschenderweise eine deutlich höhere Reaktivität auf.

In den nachfolgenden Beispielen bedeuten die Teile Gewichtsteile, die Prozente Gewichtsprozente und die Temperaturen sind in Celsiusgraden angegeben.

Beispiel 1

38,3 g 2-Naphthylamin-4,6,8-trisulfonsäure werden in 100 ml Wasser gelöst und nach Zugabe von 100 g Eis mit 25 ml 4N Natriumnitrit und 22 ml HCl conc. diazotiert. Nach beendeter Diazotierung werden 22,3 g 1-Naphthylamin-6-sulfonsäure in fester Form zugegeben. Der pH-Wert wird durch Zutropfen von ca. 40 ml NaOH konz. auf 3,0 angehoben und während 1 Stunde bei 0–5° gekuppelt.

Die rotbraune Suspension wird mit ca. 10 ml NaOH konz. bei pH 8,0 gelöst. 25 ml 4N Natriumnitrit und 50 g Eis werden zugegeben. Dann werden 22 ml HCl konz. zugegossen. Nach 30 Min. wird der Nitritüberschuss mit Sulfaminsäure zurückgestellt. 21,6 ml m-Toluidin werden zugetropft. Der pH-Wert wird mit ca. 15 ml NAOH konz. bei 3,5 gehalten. Nach beendeter Kupplung wird das Reaktionsgemisch mit NaOH konz. neutralisiert.

27,8 g Anilin-2,5-disulfonsäure werden mit NaOH konz. in 100 ml Wasser bei pH 6,5 gelöst. Dann werden unter starkem Kühlen und Rühren bei 0° 10 ml Trifluortriazin zugetropft. Der pH-Wert wird durch Zugabe von 2N NaOH bei 6–7 gehalten.

Die erhaltene Reaktionslösung wird mit der vorstehend beschriebenen Lösung des Chromophors vereinigt und bei 0–10° kondensiert. Der pH-Wert wird durch Zugabe von 2N NaOH bei 6–7 gehalten. Der fertige Farbstoff wird durch Zugabe von 200 g KCl ausgesalzen, abgenutscht, mit 5 g $Na_2HPO_4$-Puffer stabilisiert und bei 40° getrocknet.

Man erhält einen Reaktivfarbstoff, welcher Cellulosefasern in braunen Tönen färbt. Farbstoffe mit ähnlichen Eigenschaften werden erhalten, wenn nach der in Beispiel 1 angegebenen Vorschrift die in der nachfolgenden Tabelle aufgeführten Komponenten miteinander umgesetzt werden.

Tabelle

| No | Diazokomponente | Mittelkomponente | Endkomponente | Triazinsubstituent |
|---|---|---|---|---|
| 2 | 2-Naphthylamin-3,6,8-trisulfonsäure | 1-Naphthylamin-6-sulfonsäure | 3-Methylanilin | Anilin-2,5-disulfonsäure |
| 3 | 1-Naphthylamin-2,5,7-trisulfonsäure | 1-Naphthylamin-6-sulfonsäure | 3-Methylanilin | Anilin-2,5-disulfonsäure |
| 4 | Anilin-2,5-disulfonsäure | 1-Naphthylamin-6-sulfonsäure | 3-Methylanilin | Anilin-2,5-disulfonsäure |
| 5 | Anilin-2,4-disulfonsäure | 1-Naphthylamin-6-sulfonsäure | 3-Methylanilin | Anilin-2,5-disulfonsäure |
| 6 | 2-Naphthylamin-6,8-disullfonsäure | 1-Naphthylamin-6-sulfonsäure | 3-Methylanilin | Anilin-2,5-disulfonsäure |
| 7 | 2-Naphthylamin-5,7-disulfonsäure | 1-Naphthylamin-6-sulfonsäure | 3-Methylanilin | Anilin-2,5-disulfonsäure |
| 8 | 2-Naphthylamin-4,8-disulfonsäure | 1-Naphthylamin-6-sulfonsäure | 3-Methylanilin | Anilin-2,5-disulfonsäure |
| 9 | 2-Naphthylamin-1,5-disulfonsäure | 1-Naphthylamin-6-sulfonsäure | 3-Methylanilin | Anilin-2,5-disulfonsäure |
| 10 | 2-Naphthylamin-6,8-disulfonsäure | 1-Naphthylamin-6-sulfonsäure | 3-Methylanilin | Anilin-2,5-disulfonsäure |
| 11 | 2-Naphthylamin-5,7-disulfonsäure | 1-Naphthylamin-6-sulfonsäure | 3-Methylanilin | Anilin-2,5-disulfonsäure |
| 12 | 1-Naphthylamin-3,6-disulfonsäure | 1-Naphthylamin-6-sulfonsäure | 3-Methylanilin | Anilin-2,5-disulfonsäure |
| 13 | 1-Naphthylamin-4,7-disulfonsäure | 1-Naphthylamin-6-sulfonsäure | 3-Methylanilin | Anilin-2,5-disulfonsäure |
| 14 | 1-Naphthylamin-2,4-disulfonsäure | 1-Naphthylamin-6-sulfonsäure | 3-Methylanilin | Anilin-2,5-disulfonsäure |
| 15 | 1-Naphthylamin-2,7-disulfonsäure | 1-Naphthylamin-6-sulfonsäure | 3-Methylanilin | Anilin-2,5-disulfonsäure |
| 16 | 1-Naphthylamin-4,6-disulfonsäure | 1-Naphthylamin-6-sulfonsäure | 3-Methylanilin | Anilin-2,5-disulfonsäure |
| 17 | 1-Naphthylamin-4,8-disulfonsäure | 1-Naphthylamin-6-sulfonsäure | 3-Methylanilin | Anilin-2,5-disulfonsäure |
| 18 | 1-Naphthylamin-3,8-disulfonsäure | 1-Naphthylamin-6-sulfonsäure | 3-Methylanilin | Anilin-2,5-disulfonsäure |
| 19 | 2-Naphthylamin-3,6,8-trisulfonsäure | 1-Naphthylamin-6-sulfonsäure | 2,5-Dimethylanilin | Anilin-2,5-disulfonsäure |
| 20 | 1-Naphthylamin-2,5,7-trisulfonsäure | 1-Naphthylamin-6-sulfonsäure | 2,5-Dimethylanilin | Anilin-2,5-disulfonsäure |
| 21 | Anilin-2,5-disulfonsäure | 1-Naphthylamin-6-sulfonsäure | 2,5-Dimethylanilin | Anilin-2,5-disulfonsäure |
| 22 | Anilin-2,4-disulfonsäure | 1-Naphthylamin-6-sulfonsäure | 2,5-Dimethylanilin | Anilin-2,5-disulfonsäure |
| 23 | 2-Naphthylamin-6,8-disulfonsäure | 1-Naphthylamin-6-sulfonsäure | 2,5-Dimethylanilin | Anilin-2,5-disulfonsäure |
| 24 | 2-Naphthylamin-5,7-disulfonsäure | 1-Naphthylamin-6-sulfonsäure | 2,5-Dimethylanilin | Anilin-2,5-disulfonsäure |
| 25 | 2-Naphthylamin-4,8-disulfonsäure | 1-Naphthylamin-6-sulfonsäure | 2,5-Dimethylanilin | Anilin-2,5-disulfonsäure |

Tabelle (Fortsetzung)

| No | Diazokomponente | Mittelkomponente | Endkomponente | Triazinsubstituent |
|---|---|---|---|---|
| 26 | 2-Naphthylamin-1,5-disulfonsäure | 1-Naphthylamin-6-sulfonsäure | 2,5-Dimethylanilin | Anilin-2,5-disulfonsäure |
| 27 | 2-Naphthylamin-6,8-disulfonsäure | 1-Naphthylamin-6-sulfonsäure | 2,5-Dimethylanilin | Anilin-2,5-disulfonsäure |
| 28 | 2-Naphthylamin-5,7-disulfonsäure | 1-Naphthylamin-6-sulfonsäure | 2,5-Dimethylanilin | Anilin-2,5-disulfonsäure |
| 29 | 1-Naphthylamin-3,6-disulfonsäure | 1-Naphthylamin-6-sulfonsäure | 2,5-Dimethylanilin | Anilin-2,5-disulfonsäure |
| 30 | 1-Naphthylamin-4,7-disulfonsäure | 1-Naphthylamin-6-sulfonsäure | 2,5-Dimethylanilin | Anilin-2,5-disulfonsäure |
| 31 | 1-Naphthylamin-2,4-disulfonsäure | 1-Naphthylamin-6-sulfonsäure | 2,5-Dimethylanilin | Anilin-2,5-disulfonsäure |
| 32 | 1-Naphthylamin-2,7-disulfonsäure | 1-Naphthylamin-6-sulfonsäure | 2,5-Dimethylanilin | Anilin-2,5-disulfonsäure |
| 33 | 1-Naphthylamin-4,6-disulfonsäure | 1-Naphthylamin-6-sulfonsäure | 2,5-Dimethylanilin | Anilin-2,5-disulfonsäure |
| 34 | 1-Naphthylamin-4,8-disulfonsäure | 1-Naphthylamin-6-sulfonsäure | 2,5-Dimethylanilin | Anilin-2,5-disulfonsäure |
| 35 | 1-Naphthylamin-3,8-disulfonsäure | 1-Naphthylamin-6-sulfonsäure | 2,5-Dimethylanilin | Anilin-2,5-disulfonsäure |
| 36 | 2-Naphthylamin-4,6,8-trisulfonsäure | 1-Naphthylamin-6-sulfonsäure | 2,5-Dimethylanilin | Anilin-2,5-disulfonsäure |
| 37 | 2-Naphthylamin-4,6,8-trisulfonsäure | 1-Naphthylamin-6-sulfonsäure | Anilin | Anilin-2,5-disulfonsäure |

Farbstoffe mit analogen Eigenschaften werden erhalten, wenn als Mittelkomponente 1-Naphthylamin-7-sulfonsäure oder wenn als Triazinsubstituent Anilin-2,4-disulfonsäure verwendet wird.

Färbevorschrift 1

2 Teile des gemäss Beispiel 1 erhaltenen Farbstoffes werden unter Zusatz von 5–20 Teilen Harnstoff und 2 Teilen kalzinierter Soda in 100 Teilen Wasser bei 20–50°C gelöst. Mit der erhaltenen Lösung wird ein Baumwollgewebe imprägniert, so dass es um 60–80% seines Gewichtes zunimmt, und dann getrocknet. Danach wird während ½–5 Minuten bei 140–210° thermofixiert, dann während einer Viertelstunde in einer 0,1%igen kochenden Lösung eines ionenfreien Waschmittels geseift, gespült und getrocknet.

Färbevorschrift 2

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet.

Danach imprägniert man das Gewebe mit einer 20° warmen Lösung, die pro Liter 5 g Natriumhydroxyd und 300 g Natriumchlorid enthält, quetscht auf 75% Gewichtszunahme ab, dämpft die Färbung während 30 Sekunden bei 100–101°, spült, seift während einer Viertelstunde in einer 0,3%igen kochenden Lösung eines ionenfreien Waschmittels, spült und trocknet.

Färbevorschrift 3

2 Teile des gemäss Beispiel 1 erhältlichen Farbstoffes werden in 100 Teilen Wasser gelöst.

Die Lösung gibt an zu 1900 Teilen kaltem Wasser, fügt 60 Teile Natriumchlorid zu und geht mit 100 Teilen eines Baumwollgewebes in dieses Färbebad ein.

Man steigert die Temperatur auf 60°, wobei nach 30 Minuten 40 Teile kalzinierte Soda und nochmals 60 Teile Natriumchlorid zugegeben werden. Man hält die Temperatur 30 Minuten auf 60°, spült und seift dann die Färbung während 15 Minuten in einer 0,3%igen kochenden Lösung eines ionenfreien Waschmittels, spült und trocknet.

Färbevorschrift 4

4 Teile des in Beispiel 1 hergestellten Reaktivfarbstoffes werden in 50 Teilen Wasser gelöst. Dazu gibt man 50 Teile einer Lösung, die pro Liter 5 g Natriumhydroxyd und 10 g kalzinierte Soda enthält. Mit der erhaltenen Lösung wird ein

Baumwollgewebe foulardiert, so dass es um 70% seines Gewichtes zunimmt, und dann auf eine Kaule aufgewickelt. Das Baumwollgewebe wird so während 3-12 Stunden bei Raumtemperatur gelagert. Danach wird die gefärbte Ware gespült, während einer Viertelstunde mit einem nichtionogenen Waschmittel kochend eingeseift, nochmals gespült und getrocknet.

**Patentansprüche**

1. Reaktivfarbstoffe der Formel

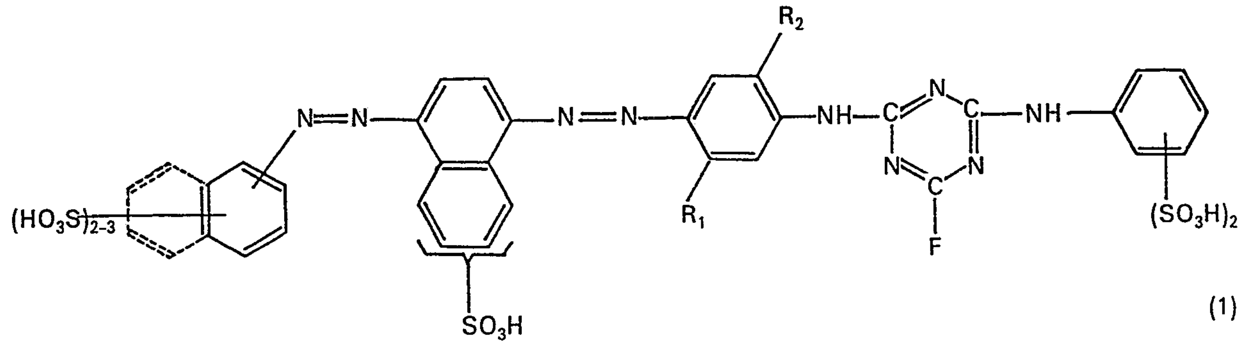

(1),

worin $R_1$ und $R_2$ unabhängig voneinander Wasserstoff, $C_{1-4}$-Alkyl oder $C_{1-4}$-Alkoxy sind.

2. Reaktivfarbstoffe gemäss Anspruch 1, worin $R_1$ und $R_2$ unabhängig voneinander Wasserstoff oder Methyl sind.

3. Reaktivfarbstoffe gemäss Anspruch 2, worin $R_1$ Methyl und $R_2$ Wasserstoff ist.

4. Reaktivfarbstoff gemäss Anspruch 3, der Formel

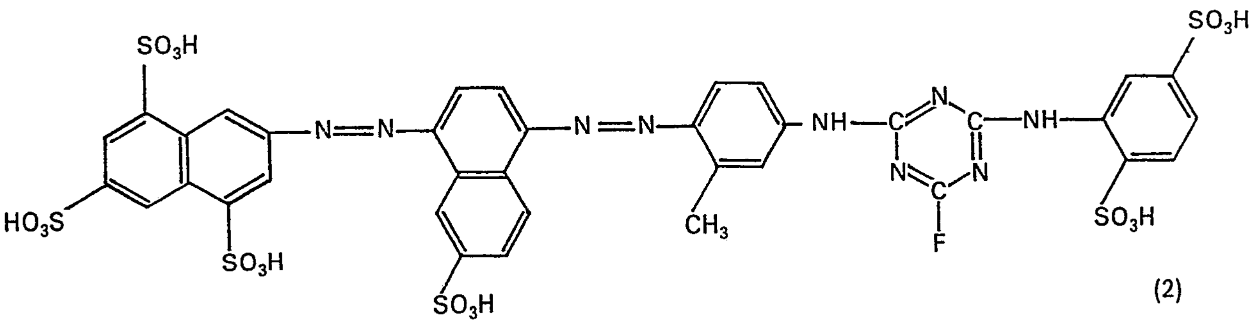

(2)

5. Verfahren zur Herstellung von Reaktivfarbstoffen der Formel (1), dadurch gekennzeichnet, dass man eine Verbindung der Formel

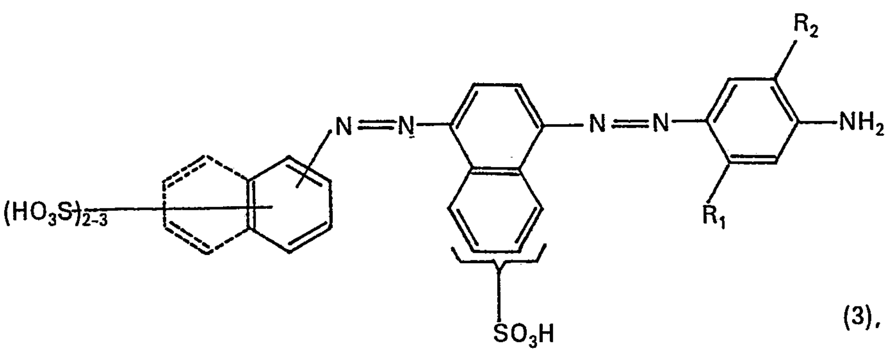

(3),

2,4,6-Trifluor-s-triazin und eine Verbindung der Formel

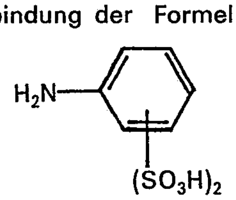

(4)

in beliebiger Reihenfolge miteinander umsetzt.

6. Verwendung der Reaktivfarbstoffe der Formel (1) zum Färben von cellulosehaltigen Fasermaterialien.

7. Verwendung gemäss Anspruch 6, zum Färben von Baumwolle nach dem Ausziehfärbeverfahren.

**Claims**

1. A reactive dye of the formula

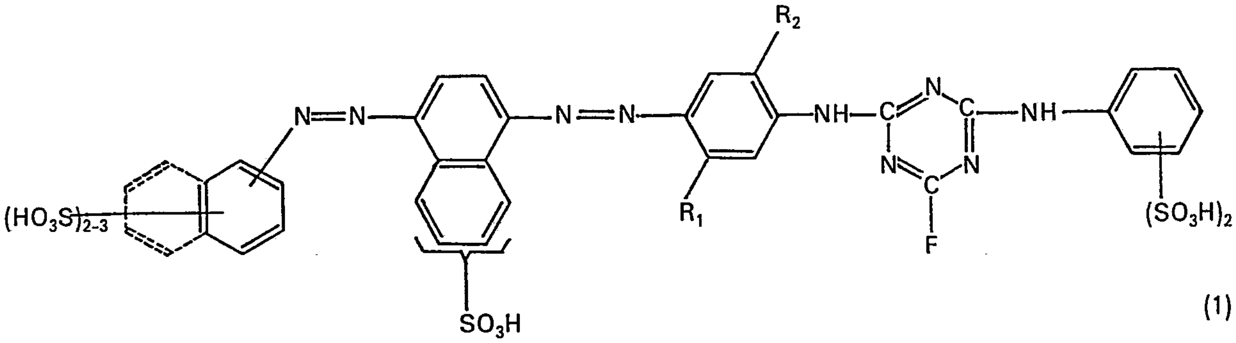

(1)

wherein each of $R_1$ and $R_2$ independently is hydrogen, $C_1$–$C_4$alkyl or $C_1$–$C_4$alkoxy.

2. A reactive dye according to claim 1, wherein each of $R_1$ an $R_2$ independently is hydrogen or methyl.

3. A reactive dye according to claim 2, wherein $R_1$ ist methyl an $R_2$ is hydrogen.

4. A reactive dye according to claim 3, of the formula

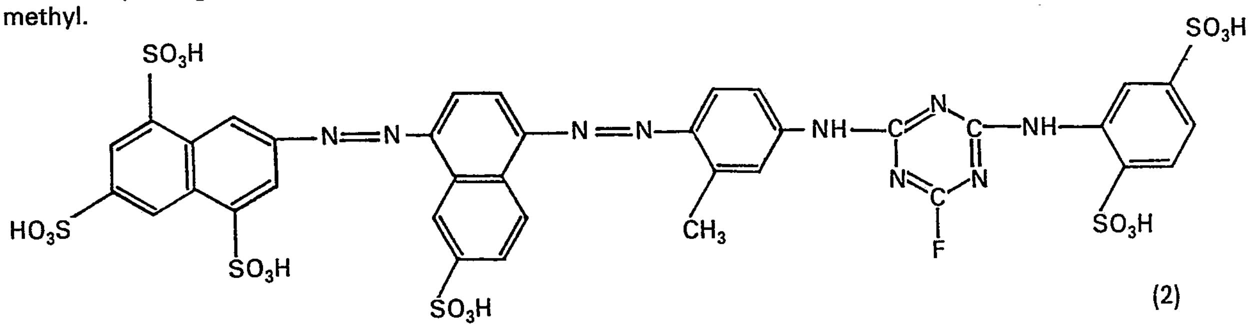

(2)

5. A process for the preparation of a reactive dye of the formula (1), which comprises reacting together, in any order, a compound of the formula

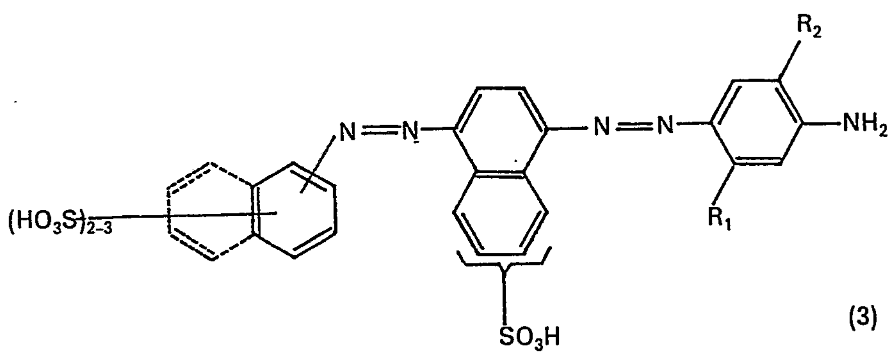

(3)

2,4,6-trifluoro-s-triazine, and a compound of the formula

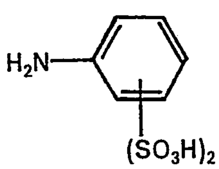

(4)

6. Use of a reactive dye of the formula (1) for dyeing cellulosic fibre material.

7. Use according to claim 6, for dyeing cotton by the exhaust dyeing process.

**Revendications**

1. Colorants réactifs de formule

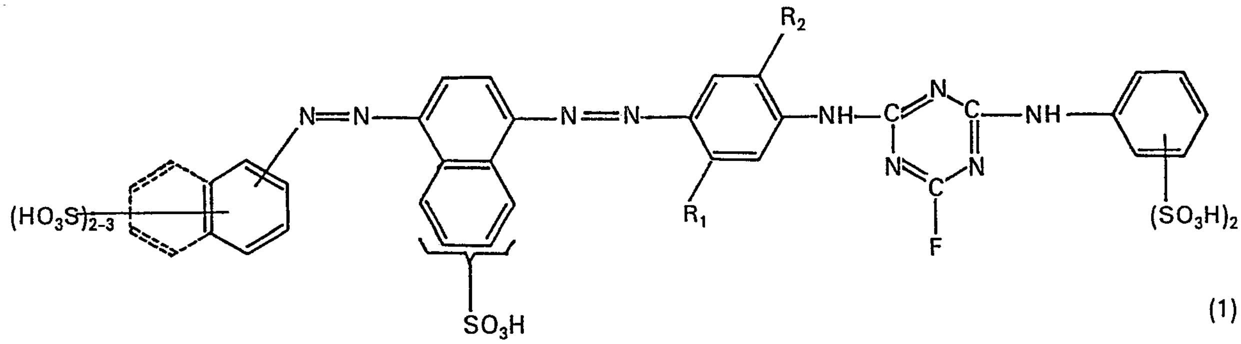

(1),

dans laquelle $R_1$ et $R_2$ représentent chacun, indépendamment l'un de l'autre, un atome d'hydrogène, un groupe alkyle en $C_1$–$C_4$ ou un groupe alcoxy en $C_1$–$C_4$.

2. Colorants réactifs selon la revendication 1, dans lesquels $R_1$ et $R_2$ représentent chacun, indépendamment l'un de l'autre, un atome d'hydrogène ou un groupe méthyle.

3. Colorants réactifs selon la revendication 2, dans lesquels $R_1$ représente un groupe méthyle et $R_2$ un atome d'hydrogène.

4. Colorant réactif selon la revendication 3, de formule

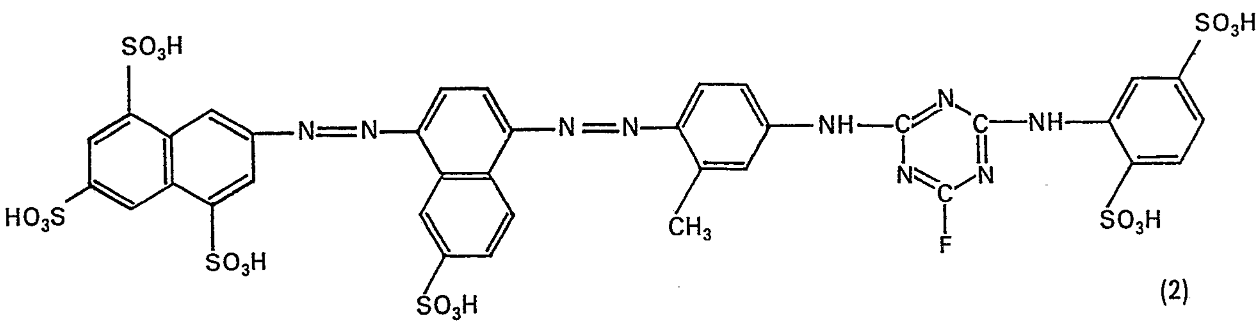

(2)

5. Procédé de préparation des colorants réactifs de formule (1) caractérisé en ce que l'on fait réagir entre eux, dans un ordre quelconque, un composé de formule

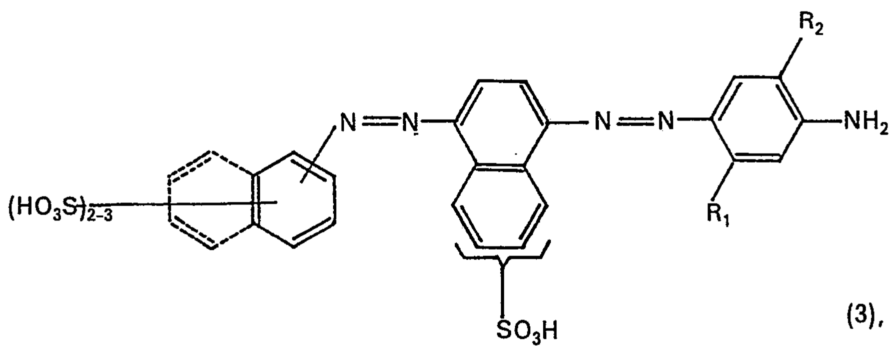

(3),

la 2,4,6-trifluoro-s-triazine, et un composé de formule

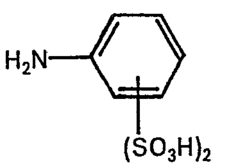

(4)

6. Utilisation des colorants réactifs de formule (1) pour la teinture de matières fibreuses contenant de la cellulose.

7. Utilisation selon la revendication 6, pour la teinture du coton par le procédé de teinture par épuisement.